## Europäisches Patentamt
## European Patent Office
## Office européen des brevets

(11) Publication number: **0 032 702**
**B1**

(12) # EUROPEAN PATENT SPECIFICATION

(45) Date of publication of patent specification: **08.08.84**

(51) Int. Cl.³: **F 16 B 13/06**

(21) Application number: **81100163.5**

(22) Date of filing: **12.01.81**

(54) Masonry plug.

(30) Priority: **16.01.80 IT 4151080**

(43) Date of publication of application:
**29.07.81 Bulletin 81/30**

(45) Publication of the grant of the patent:
**08.08.84 Bulletin 84/32**

(84) Designated Contracting States:
**AT BE CH DE FR GB LI LU NL SE**

(56) References cited:
**CA - A - 1 039 986**
**CH - A - 247 636**
**CH - A - 555 011**
**DE - C - 1 166 557**
**DE - U - 7 404 063**
**US - A - 3 304 828**
**US - A - 3 750 519**

(73) Proprietor: **Lefox S.r.l.**
**Riviera dei Ponti Romani, 22**
**I-35100 Padova (IT)**

(72) Inventor: **Morassutti, Domenico**
**Via S.M. Solferino, 99**
**I-35100 Padova (IT)**
Inventor: **Martella, Elio**
**Via G. Mameli, 26**
**I-30175 Marghera (Province of Venezia) (IT)**

(74) Representative: **Modiano, Guido et al,**
**MODIANO & ASSOCIATI S.A.S. Via Meravigli, 16**
**I-20123 Milan (IT)**

Courier Press, Leamington Spa, England.

# Description

This invention relates to a masonry plug.

More particularly, it relates to a masonry plug for anchoring or fastening elements or fixtures to walls, ceilings, or floors.

Such plugs have been available commercially for many years, and may be classified according to three general groups: a first group where the plug is made from an elastically deformable material and the fastener is a capscrew; a second group where the plug is formed from a metal material having a cone inserted into one end, the expansion occurring under the impact force, which causes deformation and consequent engagement of the plug with the hole wall; and a third group, wherein the plug is made from a number of parts, of which at least one is caused to slide under the pull applied by a screw and spreads with a wedgelike action the other parts that make up the plug to cause it to interfere with the hole wall.

An example of the plugs of the third group is shown in DE—A—7 404 063, which describes a masonry plug comprising a plurality of expandable sectors forming a sleeve which opens in a uniform and continuous manner by sliding movement and insertion of an expander cone under the pull applied by a bolt threaded therein whereby the sectors are held mutually associated by a single elastic element which also serves for holding the sectors correctly beside one another in the axial direction.

The plug of this invention is more closely related to those of the third group.

However, the known plugs of the third type thereinabove cited are not devoid of drawbacks thereamong are to be mentioned the lack of safety of the elastic element for holding the plug parts or sectors united, and the undesired possibility that, as the plug is inserted into the hole drilled in a masonry wall, the expander wedge or cone member be lost thereby coming loose from the plug expandable sectors and falling in the wall hole. Moreover, with the known plugs of the aforesaid third type it often occurs that, as the tightening of the plug bolt is begun, the plug might start to turn bodily, together with the expander cone, thereby the tightening of the plug becomes a very difficult or nearly impossible operation.

Thus, the present invention sets out to eliminate the aforesaid and other drawbacks of the known plugs, in a simple and economical way.

Within the above general aim, it is possible to arrange that the masonry plug according to the invention enables the threading in of a screw to produce a translatory movement of the wedge or cone member towards the outside of the hole and a uniform continuous expansion of the plug parts or sectors contacting the hole wall.

It is further possible to arrange that the plug according to the invention realizes an original way of holding together the various sectors of the plug with a novel elastic device.

It is further possible to arrange that the masonry plug of this invention is prevented from turning in the hole during the threading-in step.

It is further possible to arrange that the plug of this invention has an expander cone which cannot rotate and can be moved without undue frictional resistance with the expandable elements.

The masonry plug of this invention is defined in the appended claim 1.

The features and advantages of the invention will be more apparent from a detailed description of a preferred embodiment thereof given herein and illustrated in the accompanying drawings, where:

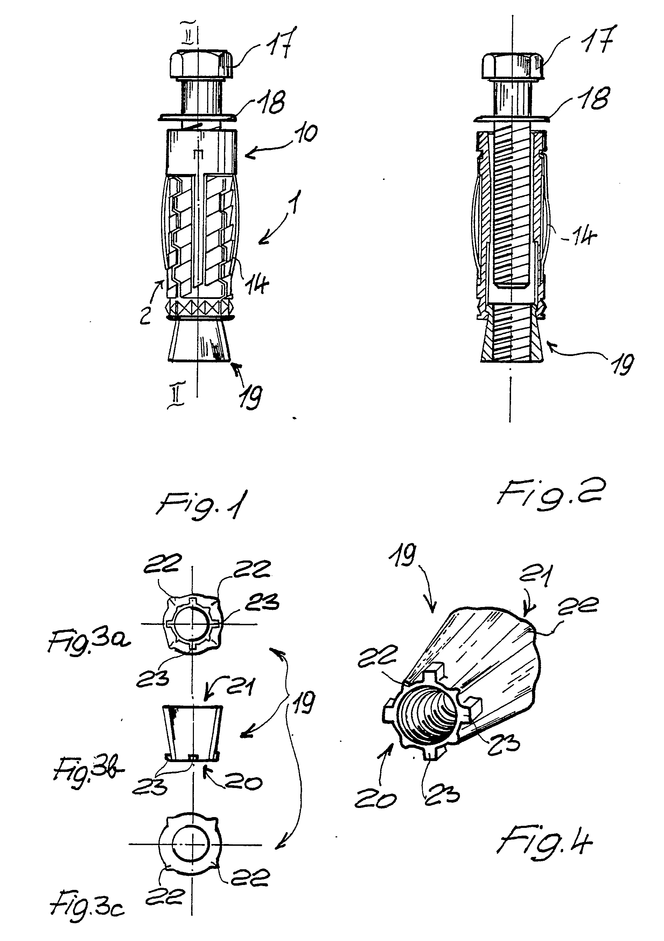

Figure 1 is an overall view of the masonry plug according to the invention;

Figure 2 is a sectional view taken along the line II—II of Figure 1;

Figures 3a, 3b, and 3c show respectively a front view, side view and rear view of the expander cone;

Figure 4 is a perspective view of the expander cone;

Figures 5a, 5b, 5c, 5d, and 5e are views of one expandable sector, respectively front external, front internal, side, and sectional along a centerplane, and plan views;

Figure 6 is a side view of the tulip spring which holds elastically together the various expandable sectors and the expander cone; and

Figure 7 is a plan developed view of said tulip spring.

With reference to the drawing figures, the masonry plug according to this invention comprises a substantially cylindrical metal sleeve 1 resulting from arranging four expandable sectors 2 side-by-side.

Said sectors 2 are ideally obtained by cutting said sleeve 1 along two orthogonal planes intersecting each other along a line which coincides with the geometrical axis of said sleeve.

The outer surface of said sectors 2 has a plurality of raised portions 3 which follow inclined lines on the ideal outer surface and improve the holding power on the internal wall of the hole accommodating this plug.

The area affected by said raised portions 3 does not extend along the entire length of the sector 2 but leaves two bands, a front one 4 which is wide and tapered and a rear one 5 which is indented; the terms "front" and "rear" refer to the position of insertion of a masonry plug into a hole in a masonry wall.

Along the contact line between the sectors 2, such raised portions 3 protrude to define projecting engagement teeth 6 of substantially trapezoid shape, which are inserted in mating seats 7 formed in an adjacent sector.

In actual practice, when viewing the right and left edges of a sector 2, one notices seat 7 and teeth 6 which are arranged alternately and exchanged at the two edges.

This plurality of interlocks allows the individual sectors 2 to be held correctly beside one another in the longitudinal direction.

On the outer face of each sector 2, there is formed a longitudinally extending recessed seat 8 which spans substantially the whole area carrying said raised portions 3.

In the front band 4, there is provided a transverse groove 9 to the geometrical axis of the plug.

A tulip spring 10 die cut from piano steel and then rolled comprises a base strip 11 which defines substantially a cylinder which is maintained as such by a lug 12 being inserted into a seat 13, formed on the two strip segments which are laid side-by-side after folding.

Said base strip 11 has four additional long lugs 14 substantially orthogonal thereto and having an arcuate pattern, which are inserted into said seats 8 and are forced thereagainst by virtue of their inherent elasticity.

Four additional tabs 15, die cut to a "C" shape from said strip 11 and bent over inwardly, are inserted into the grooves 9 to correctly position the sectors 2 and prevent them from slipping with respect to one another.

Said tulip spring 10 serves several functions: firstly, it surrounds with its base strip 11 the bands 4 of the sectors 2 to keep them perfectly side-by-side and form a cylindrical sleeve.

In addition thereto, with the lugs 14, it also holds the free ends of such sectors side-by-side, and is deformed elastically very softly when such sectors 2 expand in a smooth and continuous manner.

The arcuate shape of such lugs 14, additionally to imparting elasticity thereto, interferes with the inside wall of the hole as the plug is being inserted and prevents the whole plug from turning upon tightening the bolt.

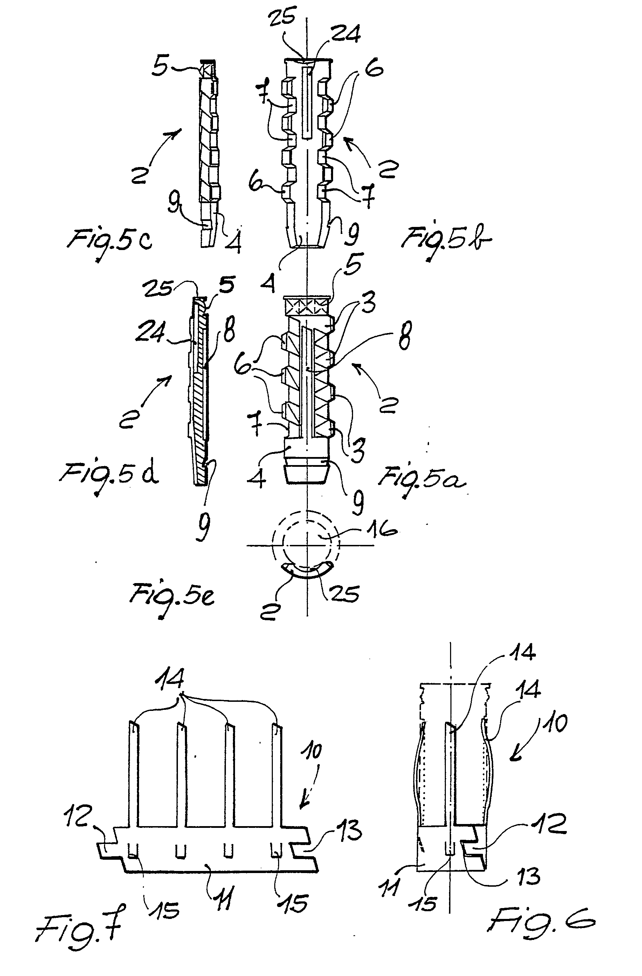

The taper of the band 4 of the sectors 2, as clearly shown in Figures 5a and 5b, allows a free mutual pivoting of the sectors as the latter expand with center practically within the cylindrical region obtained by bending over the strip 11.

Through the central bore 16 obtained by positioning the sectors 2 side-by-side there is passed a bolt 17 which has a washer 18 resting on the heads of the sectors 2 and held stationary practically flush with the surface of the wall or of the object to be fastened, upon threading in.

Said bolt 17 is threaded into an expander cone 19, which is drilled axially and threaded internally, the region 20 whereof, of smaller diameter, is sized to penetrate the bore 16 defined by the four sectors 2.

The larger diameter portion 21 has instead larger dimensions than the bore 16, although smaller than the maximum cross section of the plug, such as not to hinder the insertion into the hole which has to be drilled into the wall and never touch the hole walls.

The outer surface of said expander cone 19 has four rounded ribs 22 which extend substantially along four generatrices of the conical surface at the lines of contact of the sectors 2.

Four prongs 23 are associated with the edge of the region 20 and intermediately located between said ribs 22, and are inserted in four longitudinal channels 24 formed into the inside face of the sectors 2 along a middle line.

Such channels open neither to the front head, not to the rear one of said sector 2, and control therefore the travel distance of the expander cone 19 without allowing the latter to come loose, not even if the bolt 17 is fully disengaged from the plug.

To facilitate the movement of said expander cone 19, at the inside region of the heads of said sectors 2 where the cone 19 is active, there are provided lead-in bevels 25 conformed to the conical surface.

The operation of this masonry plug will be apparent from the foregoing description, but it should be noted, in particular, that as the plug is inserted into the hole drilled, for example, in a wall, the expander cone cannot be lost and come loose from the expandable sectors because the prongs cannot disengage from the channels wherein they are inserted.

For the same reason, upon inserting the bolt, the expander cone is prevented from falling into the hole.

As the tightening of the bolt is begun, the plug might start to turn bodily because its size with respect to the closed expandable sectors is surely smaller than the hole; the arcuate lugs of the tulip spring are instead already contacting the inner wall of the hole, and by exploiting also the sharp corners resulting from the die cutting of sheet metal, they are caused to resist a possible and undesired rotation, thus permitting the initial drawing of the expander cone until the expandable sectors are also brought into contact with the inner wall of the hole with a uniform and continuous contact.

The expander cone can in now way turn along with the bolt both on account of the rounded ribs which insert themselves between the sectors and of the prongs which are only allowed to slide into the respective channel.

The expander cone can in no way turn stacles to their spreading on account of the taper at the pivoting area, and remain in all cases side-by-side owing both to the teeth at the sides and the tabs inserted in the grooves.

The expansion of the plug begins while the cone is still on the outside. Therefore, at the point of maximum effort (end portion of the expandable sectors) the expander cone acts as a thrust member, thus eliminating the risk of bending or breaking the sectors inwardly.

Moreover, during the expansion phase, the sectors meeting no voids, have a larger holding surface area with the inner wall of the hole.

From the manufacturing standpoint, it should be further noted that the tulip spring is efficient and construction-wise simple, it performing, as mentioned hereinabove, more than one function.

Of course, the materials and dimensions may be any ones, to suit individual requirements.

## Claims

1. A masonry plug comprising a plurality of expandable sectors (2) forming a sleeve (1) which opens in a uniform and continuous manner by sliding movement and insertion of an expander cone (19) under the pull applied by a bolt (17) threaded therein, whereby said sectors (2) are held mutually associated by a single elastic element (10) which also serves for holding the sectors (2) correctly beside one another in the axial direction, characterized in that said elastic element (10) includes centripetally acting spring portions (14) which have projecting zones for preventing the rotation of the plug within the hole in which it is driven home, in that said expander cone (19) has ribs (22) and prongs (23) acting on said sectors for guiding the expander cone (19) and for preventing its rotation, and in that the edges of the sectors (2) have teeth (6) and mating seats (7) for maintaining the sectors correctly beside one another.

2. A masonry plug according to Claim 1, characterized in that said elastic element is tulip type spring (10) made as a single piece by die-cutting it from sheet steel and successively bending over to enclose an ideal cylinder having the dimensions of said sleeve (1), and has a strip (11) adapted for surrounding said expandable sectors (2), tabs (15) of engagement with said sectors (2), first elastic lugs (14) acting on said sectors (2) to hold them side-by-side, and formations of a second lug (12) and of a seat (13) adapted for maintaining said tulip spring (10) in the desired shape.

3. A masonry plug according to Claims 1, 2, characterized in that said strip (11) of the tulip spring (10) adapted for surrounding said expandable sectors (2) has a sufficient width forming a cylindrical containment seat.

4. A masonry plug according to Claims 1—3, characterized in that said tabs (15) of the tulip spring (10) adapted for engaging said sectors (2) are formed by die-cutting to a "C" the sheet metal which forms the tulip spring (10) at the area of the strip (11), said tabs (15) being bent inwardly and inserted into a groove (9) provided at the corresponding area of the sectors (2).

5. A masonry plug according to Claim 1—4, characterized in that said engagement tabs (15) are provided as at least one per each sector (2).

6. A masonry plug according to Claims 1—5, characterized in that said lugs (14) of the tulip spring (10) adapted for holding said sectors (2) elastically side-by-side are of arcuate shape and extend from said strip (11), one per sector, and are inserted with their free ends into longitudinal seats (8) provided at the middle area of the outer surface of each sector (2).

7. A masonry plug according to Claims 1—6, characterized in that the two ends of said strips (11) which arrange themselves side-by-side during the bending to a cylinder, have respectively said second lug (12) shaped as a rectangular tooth and said seat (13) shaped for said lug (12), for the purpose of maintaining constant even under a strain load the cylindrical shape of said strip (11) which may only change, if any, its diameter during the assembling stage.

8. A masonry plug according to Claims 1—7, characterized in that at the area where said sectors (2) are contained in the cylindrical strip (11) of said tulip spring (10), they are tapered laterally such that when they diverge mutually away they cannot interfere with one another.

9. A masonry plug according to Claims 1—8, characterized in that said arcuate lugs (14), have an overall size which exceeds the cross-section of the plug and interfere with the walls of the hole after the plug has been inserted, and constitute a first engagement effective to prevent the plug from rotating while the bolt (17) is turned to tighten it.

10. A masonry plug according to Claims 1—9, characterized in that the outer surface of said sectors (2) has raised portions (3) and recessed portions adapted for facilitating the engagement of the plug with the inner wall of the insertion hole.

11. A masonry plug according to one or more of the preceding claims, characterized in that said expander cone (19) — substantially a truncated cone drilled and threaded axially — has a plurality of rounded ribs (22) arranged along generatrices of the ideal conical surface, said ribs (22) being located at the lines of contact of said expandable sectors (2).

12. A masonry plug according to one or more of the preceding claims, characterized in that said expander cone (19), with the plug fully closed, is partially inserted into the hole determined by the arrangement of said sectors (2) side-by-side, whereby its prongs (23) — preferably one per sector (2) — are inserted in channels (24) provided at the middle area of the inner surface of said expandable sectors (2), the translatory movement of the expander cone (19) during the threading in of the belt (17) being thus allowed and the rotation thereof prevented.

13. A masonry plug according to one or more of the preceding claims, characterized in that said channels (24) only span a certain inside region of said sectors (2), whereby the expander cone (19) remains in all cases hooked up even in the event that the bolt (17) is removed or the bolt (17) urges the cone (19) toward the outside of the plug.

14. A masonry plug according to one or more of the preceding claims, characterized in that at the contact areas between the expander cone (19) and expandable sectors (2), there are provided rounded bevels (25) adapted to match the conical surface and reduce the friction.

15. A masonry plug according to one or more of the preceding claims, characterized in that said expander cone (19) has an opening angle and length calculated such that it acts while it is still partially on the outside of said expandable sectors (2) such as to constitute resting shoulders therefor at the area of maximum effort.

## Revendications

1. Cheville de maçonnerie comprenant une pluralité de secteurs dilatables (2) formant un manchon (1) qui s'ouvre de façon uniforme et continue par le mouvement de coulissement et l'insertion d'une cône dilateur (19) sous la traction appliquée par un boulon (17) qui y est vissé, lesdits secteurs (2) étant tenus mutuellement associés par un élément élastique unique (10) qui sert aussi à maintenir les secteurs (2) correctement les uns à côte des autres dans la direction axiale, caractérisée en ce que ledit élément élastique (10) comporte des portions de ressorts (14) à action centripète qui présentent des zones en saillie pour empêcher la rotation de la cheville dans le trou dans lequel elle est enfoncée, en ce que ledit cône dilateur (19) présente des nervures (22) et des griffes (23) agissant sur lesdits secteurs pour guider le cône dilateur (19) et pour empêcher sa rotation, et en ce que les bords des secteurs (2) présentent des dents (6) et des sièges correspondants (7) pour maintenir les secteurs correctement les uns à côté des autres.

2. Cheville de maçonnerie selon la revendication 1, caractérisée en ce que ledit élément élastique est une ressort (10) du type tulipe réalisé en une pièce unique en le découpant par matriçage dans de la tôle d'acier et en le recourbant ensuite pour enfermer un cylindre imaginaire ayant les dimensions dudit manchon (1), et comporte une bande (11) propre à entourer lesdits secteurs dilatables (2), des pattes (15) de prise avec lesdits secteurs (2), des premières languettes élastiques (14) agissant sur lesdits secteurs (2) pour les maintenir côte à côte, et des formations d'une seconde languette (12) et d'un siège (13) propres à maintenir ledit ressport tulipe (10) sous la forme désirée.

3. Cheville de maçonnerie selon les revendications 1 et 2, caractérisée en ce que ladite bande (11) du ressort tulipe (10) propre à entourer lesdits secteurs dilatables (2) a une largeur suffisante formant un siège de retenue cylindrique.

4. Cheville de maçonnerie selon les revendications 1 à 3, caractérisée en ce que lesdites pattes (15) du ressort tulipe (10) propres à venir en prise avec lesdits secteurs (2) sont formées en découpant par matriçage en ''C'' la tôle métallique qui forme le ressort tulipe (10) dans la zone de la bande (11), lesdites pattes (15) étant courbées vers l'intérieur et insérées dans une rainure (9) prévue dans la zone correspondante des secteurs (2).

5. Cheville de maçonnerie selon les revendications 1 à 4, caractérisée en ce que lesdites pattes de prise (15) sont prévues à raison d'une au moins pour chaque secteur (2).

6. Cheville de maçonnerie selon les revendications 1 à 5, caractérisée en ce que lesdites languettes (14) du ressort tulipe (10) propres à maintenir lesdits secteurs (2) élastiquement côte à côte sont de forme incurvée et s'étendent à partir de ladite bande (11), une par secteur, et sont insérées avec leurs extrémités libres dans des sièges longitudinaux (8) prévus dans la zone médiane de la surface extérieure de chaque secteur (2).

7. Cheville de maçonnerie selon les revendications 1 à 6, caractérisée en ce que les deux extrémités de ladite bande (11) qui se placent côte à côte lors du cintrage en un cylindre, présentent respectivement ladite seconde languette (12) ayant la forme d'une dent rectangulaire et ledit siège (13) ayant une forme adaptée à ladite languette (12), dans le but de maintenir constante, même sous contrainte, la forme cylindrique de ladite bande (11) qui ne peut changer que de diamètre au cours de l'étape d'assemblage.

8. Cheville de maçonnerie selon les revendications 1 à 7, caractérisé en ce que, dans la zone où lesdits secteurs (2) sont contenus dans la bande cylindrique (11) dudit ressort tulipe (10), ils sont biseautés latéralement de façon à ne pas pouvoir se gêner mutuellement lorsqu'ils divergent les uns des autres.

9. Cheville de maçonnerie selon les revendications 1 à 8, caractérisée en ce que lesdites languettes incurvées (14) ont une dimension hors tout qui excède la section transversale de la cheville et empiète sur les parois du trou après insertion de la cheville, et constituent une première prise effective pour empêcher la cheville de tourner pendant qu'on tourne le boulon (17) pour le serrer.

10. Cheville de maçonnerie selon les revendications 1 à 9, caractérisée en ce que la surface extérieure desdits secteurs (2) comporte des parties en relief (3) et des parties en creux propres à faciliter la mise en prise de la cheville avec la paroi interne du trou d'insertion.

11. Cheville de maçonnerie selon une ou plusieurs des revendications précédentes, caractérisée en ce que ledit cône dilateur (19) — essentiellement un cône tronqué percé et fileté axialement — présente une pluralité de nervures arrondies (22) disposées selon des génératrices de la surface conique imaginaire, lesdites nervures (22) étant situées aux lignes de contact desdits secteurs dilatables (2).

12. Cheville de maçonnerie selon une ou plusieurs des revendications précédentes, caractérisé en ce que ledit cône dilateur (19), quand la cheville est entièrement fermée, est partiellement inséré dans le trou déterminé par la disposition desdits secteurs (2) côte à côte, ses griffes (23) — de préférence une par secteur (2) — sont insérées dans des canaux (24) prévus dans la zone médiane de la surface interne desdits secteurs dilatables (2), les mouvement de translation du cône dilateur (19) lors du vissage du boulon (17) étant ainsi permis et sa rotation empêchée.

13. Cheville de maçonnerie selon une ou plusieurs des revendications précédentes, caractérisée en ce que lesdits canaux (24) couvrent seulement une certaine région de l'intérieur desdits secteurs (2), grâce à quoi le cône dilateur (19) demeure en tout état de cause assemblé même dans le cas où le boulon (17) est retiré ou que le boulon (17) sollicite le cône (19) vers l'extérieur de la cheville.

14. Cheville de maçonnerie selon une ou plusieurs des revendications précédentes, caractérisée en ce que, dans les zones de contact entre le cône dilateur (19) et les secteurs dilatables (2), des chanfreins arrondis (25) sont prévus, propres à épouser la surface conique et à réduite le frottement.

15. Cheville de maçonnerie selon une ou plusieurs des revendications précédentes, caractérisée en ce que ledit cône dilateur (19) a un angle d'ouverture et une longueur calculés de telle sorte qu'il agit lorsqu'il est encore partiellement à l'extérieur desdits secteurs dilatables (2) pour constituer des talons d'appui pour ceux-ci dans la zone d'effort maximum.

**Patentansprüche**

1. Mauerdübel, bestehend aus einer Vielzahl von auseinanderspreizbaren Segmenten (2), die ein Hülse (1) bilden, welche sich gleichmäßig und stufenlos beim Einschieben eines Spreizkegels (19) unter dem durch einen eingeschraubten Bolzen (17) ausgeübten Druck öffnet, wobei die genannten Segmente (2) durch eine einzigen elastischen Teil (10) zusammengehalten werden, der auch zur korrekten Halterung der Segmente (2) nebeneinander in axialer Richtung dient, dadurch gekennzeichnet, daß der genannte elastische Teil (10) zentripetal wirkende Federabschnitte (14) aufweist, welche vorspringende Zonen zur Vorhinderung der Drehung des Dübels in dem Loch, in das er eingesetzt wurde, besitzen, daß der Spreizkegel (19) Rippen (22) und Klauen (23) besitzt, die auf die Segmente zur Führung des Spreizkegels (19) und zur Verhinderung von dessen Drehung wirken, und daß die Kanten der Segmente (2) Zähne (6) und Paßsitze (7) zur korrekten Halterung nebeneinander der Sektoren aufweisen.

2. Mauerdübel nach Anspruch 1, dadurch gekennzeichnet, daß der elastische Teil aus einer tülpenförmigen Feder (10) besteht, die einteilig durch Ausstanzen aud Stahlblech und nachfolgendes Umbiegen, derart, daß sie einen gedachten Zylinder mit den Abmessungen der Hülse (1) umschließt, hergestellt wurde und einen Streifen (11), der geeignet ist, die genannten auseinanderspreizbaren Segmente (2) umzufassen, Nasen (15) zum Eingriff mit den genannten Segmenten (2), erste federnde Fortsätze (14), die auf die Segmente (2) wirken, um sie nebeneinander zu halten, und Gestaltungen eines zweiten Fortsatzes (12) und eines Sitzes (13), um die Tülpenfeder (10) in der gewünschten Form zu halten, aufweist.

3. Mauerfübel nach den Ansprüchen 1, 2, dadurch gekennzeichnet, daß der Streifen (11) der Tülpenfeder (10) für die Umschließung der Auseinanderspreizbaren Segmente (2) genügend breit ist und einen zylindrischen Aufnahmesitz bildet.

4. Mauerdübel nach den Ansprüchen 1—3, dadurch gekennzeichnet, daß die Nasen (15) der Tülpenfeder (10) für den Eingriff mit den Segmenten (2) durch "C"-förmiges Ausstanzen des die Tülpenfeder (10) bildenden Metallbleches im Bereich des Streifens (11) gebildet und nach innen gebogen und in eine in der entsprechenden Zone der Segmente (2) vorgesehene Rille (9) eingesteckt sind.

5. Mauerdübel nach den Ansprüchen 1—4, dadurch gekennzeichnet, daß für jedes Segment (2) wenigstens eine Eingriffsnase (15) vorgesehen ist.

6. Mauerdübel nach den Ansprüchen 1—5, dadurch gekennzeichnet, daß die genannten Fortsätze (14) der Tülpenfeder (10) aur elastischen Halterung nebeneinander der Segmente (2) eine gekrümmte Form besitzen und sich, jeweils einer je Segment, von Streifen (11) aus erstrecken und mit ihren freien Enden in Längssitze (8) eingreifen, die im Mittelbereich der Außenfläche eines jeden Segmentes (2) augebildet sind.

7. Mauerdübel nach den Ansprüchen 1—6, dadurch gekennzeichnet, daß die beide Ende des Streifens (11), die beim Biegen zu einem Zylinder nebeneinader zu liegen kommen, jeweils den genannten zweiten als rechteckigen Zahn ausgebildeten Fortsatz (12) und den zur Aufnahme des Fortsatzes (12) geformten Sitz (13) besitzen, um auch bei einer Verformungsbelastung die zylindrische form des Streifens (11) konstant zu halten, welcher seinen Durchmesser, wenn überhaupt, nur in den Montagestufe ändert.

8. Mauerdübel nach den Ansprüchen 1—7, dadurch gekennzeichnet, daß in dem Bereich, in welchem die Segmente (2) im zylindrischen Streifen (11) der Tülpenfeder (10) enthalten sind, letztere seitlich spitz zulaufend ausgebildet sind, so daß sie nicht ineinandergreifen, wenn sie gegenseitig divergieren.

9. Mauerdübel nach den Ansprüchen 1—8, dadurch gekennzeichnet, daß die gekrümmten Fortsätze (14) eine Gesamtgröße besitzen, welche den Querschnitt des Dübels übersteigt, und an der Lochwandung nach dem Einsetzten des Dübels angreifen und einen ersten, eine Drehung des Dübels beim Einschrauben des Bolzens (17) wirksam verhindernden Eingriff darstellen.

10. Mauerdübel nach den Ansprüchen 1—9, dadurch gekennzeichnet, daß die Außenfläche der Segmente (2) erhabene Abschnitte (3) und vertiefte Abschnitte zur Erleichterung des Eingriffes des Dübels mit der Innenwand des Einsteckloches aufweisen.

11. Mauerdübel nach einem oder mehreren der vorhergehenden Ansprüche, dadurch gekennzeichnet, daß der Spreizkegel (19) — im wesentlichen ein axial durchbohrter und mit einem Gewinde versehener Kegelstumpf — eine Vielzahl von abgerundeten Rippen (22) aufweist, die entlang von Erzeugenden der gedachten Kegelfläche angeordnet sind und auf dem Berührungslinien der auseinanderspreizbaren Segmente (2) liegen.

12. Mauerdübel nach einem oder mehreren der vorhergehenden Ansprüche, dadurch gekennzeichnet, daß der Spreizkegel (19) bei voll geschlossenem Dübel teilweise in das durch die Anordnung nebeneinander der Segmente (2) gebildete Loch eingesetzt ist, wobei seine Klauen (23) — vorzugsweise eine je Segment (2) — in Kanälen (24) liegen, die im Mittelbereich der Innenfläche der auseinanderspreizbaren Segmente (2) ausgebildet sind und dadurch die Verschiebung des Spreizkegels (19) während des Einschraubens des Bolzens (17) ermöglicht und dessen Drehung verhindert wird.

13. Mauerdübel nach einem oder mehreren der vorhergehenden Ansprüche, dadurch gekennzeichnet, daß die Kanäle (24) nur über einen gewissen Innenseitenbereich der Segmente (2) verlaufen, wobei der Spreizkegel (19) in jedem Fall eingehängt bleibt, auch dann, wenn der Bolzen (17) herausgeshraubt wird oder den Kegel (19) gegen die Außenseite des Dübels drückt.

14. Mauerdübel nach einem oder mehreren der vorhergehenden Ansprüche, dadurch gekennzeichnet, daß an den Berührungsflächen zwischen dem Spreizkegel (19) und den auseinanderspreizbaren Segmenten (2) abgerundete Abschrägungen (25) zur Passung mit der Kegelfläche und Herabsetzung der Reibung vorgesehen sind.

15. Mauerdübel nach einem oder mehreren der vorhergehenden Ansprüche, dadurch gekennzeichnet, daß der Spreizkegel (19) eine Öffnungswinkel und eine Länge besitzt, die derart berechnet sind, daß er wirkt, wenn er sich noch teilweise außerhalb der auseinanderspreizbaren Segmente (2) befindet, um Aufrastschultern für diese in der Zone maximaler Krafteinwirkung zu bilden.

Fig.1

Fig.2

Fig.3a

Fig.3b

Fig.3c

Fig.4

Fig.5c

Fig.5b

Fig.5d

Fig.5a

Fig.5e

Fig.7

Fig.6